# EUROPÄISCHE PATENTSCHRIFT

(11) **EP 0 979 849 B1**
(45) Veröffentlichungstag und Bekanntmachung des Hinweises auf die Patenterteilung: **15.01.2003**
(21) Anmeldenummer: 99115351.1
(22) Anmeldetag: 03.08.1999
(51) Int. Cl.: C09B 67/22, C09B 62/51, C09B 62/44, D06P 1/38

(54) **Farbstoffmischung von wasserlöslichen faserreaktiven Azofarbstoffen, Verfahren zu ihrer Herstellung und ihre Verwendung**
Mixture of water soluble reactive azo dyes, process to manufacture same and its use
Mélange de colorants azoiques réactifs aquasolubles, son procédé de fabrication et son utilisation

(30) Priorität: 13.08.1998 DE 19836661
(43) Veröffentlichungstag der Anmeldung: 16.02.2000
(73) Patentinhaber: DyStar Textilfarben GmbH & Co. Deutschland KG, 65926 Frankfurt am Main (DE)
(72) Erfinder: Pedemonte, Ronald P., Dr., 65817 Eppstein-Vockenhausen (DE); Steckelberg, Joachim, Dr., 65719 Hofheim (DE)

(56) Entgegenhaltungen:
- EP-A- 0 094 055
- EP-A- 0 177 449
- EP-A- 0 534 342
- EP-A- 0 576 026
- EP-A- 0 719 841
- PATENT ABSTRACTS OF JAPAN vol. 016, no. 202 (C-0940), 14. Mai 1992 (1992-05-14) & JP 04 033966 A (SUMITOMO CHEM CO LTD), 5. Februar 1992 (1992-02-05)

## Beschreibung

Die Erfindung liegt auf dem technischen Gebiet der faserreaktiven Azofarbstoffe.

Aus den Dokumenten EP-A 177 449 und Patent Abstracts of Japan vol.016, no.202 (C-0940), 14. Mai 1992 (1992-05-14) & JP 04 033966 A (Sumitomo Chem Co. Ltd), 5. Februar 1992 (1992-02-05) sind Farbstoffe der nachstehend definierten allgemeinen Formel 1, sowie aus EP-A 534 342 und EP-A 094 055 Farbstoffe der nachstehend definierten allgemeinen Formel 2 bekannt. Mischungen von wasserlöslichen Reaktivfarbstoffen ähnlicher Struktur sind außerdem aus oben genanntem Zitat aus Patent Abstracts of Japan und aus EP-A 719 841 bekannt.
Diese Farbstoffe besitzen jedoch gewisse anwendungstechnische Mängel, wie beispielsweise eine zu große Abhängigkeit der Farbausbeute von wechselnden Färbeparametern im Färbeprozeß, eine unzureichende Löslichkeit im wäßrigen Färbebad in höheren Farbstoffkonzentrationen in Gegenwart von Elektrolytsalzen oder einen ungenügenden Farbaufbau auf Baumwolle (ein guter Farbaufbau ergibt sich aus der Fähigkeit eines Farbstoffes, bei Anwendung erhöhter Farbstoffkonzentrationen im Färbebad die entsprechend farbstärkere Färbung zu liefern). Folge dieser Mängel können schlechte Reproduzierbarkeiten der erhaltenen Färbungen sein.

Es ist jedoch insbesondere wichtig, Färbungen mit guter Farbausbeute zu erhalten, d.h. Färbungen, deren Farbtiefe im Verhältnis zu eingesetzter Farbstoffmenge, beispielsweise im Vergleich zu anderen Farbstoffen, aufgrund der Farbeigenschaft des Farbstoffes selbst (hoher Extinktionswert) und aufgrund des färberischen Verhaltens dieses Farbstoffes, wie gutes Ausziehvermögen und hoher Fixierwert, möglichst hoch ist. Setzt man Mischungen von Farbstoffen bestimmter Farbausbeute ein, so ist es die Regel, daß sich die Farbausbeute dieser Mischung aus der Summe der Farbausbeuten der Einzelfarbstoffe ergibt. Aus diesem Grund wird die Farbausbeute einer Mischung von beispielsweise zwei Farbstoffen geringer sein als die Farbausbeute, die sich durch den Farbstoff mit der größeren Farbausbeute-Eigenschaft bei dessen Einsatz als Einzelfarbstoff, jedoch in der Gesamtmenge der beiden Einzelfarbstoffe, ergibt.

Mit der vorliegenden Erfindung wurde nunmehr gefunden, daß die Farbstärke der nachstehend beschriebenen erfindungsgemäßen Farbstoffmischungen überraschenderweise höher liegen als die Summe der Farbstärken, die die Einzelfarbstoffe der Farbstoffmischung liefern. Dieser synergistische Effekt zeigt sich zudem in einem verbesserten Aufbauverhalten der erfindungsgemäßen Mischungen, insbesondere auf Baumwolle, gegenüber den einzelnen Farbstoffen, die in der Mischung enthalten sind.

Die vorliegende Erfindung betrifft Farbstoffmischungen, enthaltend einen oder mehrere Azofarbstoffe der allgemeinen Formel (1) und einen oder mehrere Azofarbstoffe der allgemeinen Formel (2) 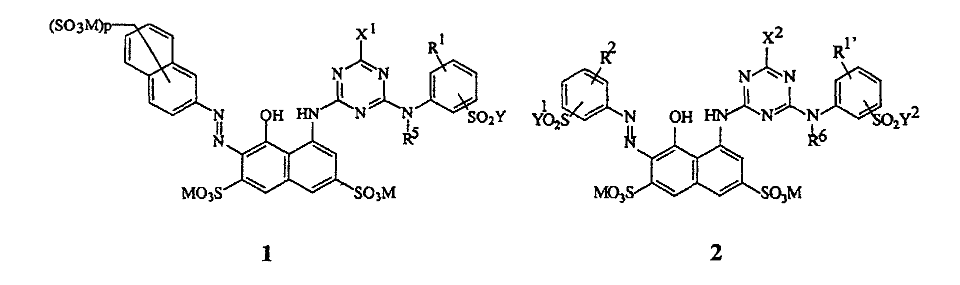 worin
p 1 oder 2 ist,
R¹, R^{1'} und R² unabhängig voneinander für Wasserstoff, eine Gruppe der allgemeinen Formel SO₃M oder OCH₃ stehen,
R⁵ und R⁶ unabhängig voneinander für Wasserstoff oder C₁-C₄ Alkyl stehen,
X¹ und X² unabhängig voneinander Fluor oder Chlor bedeuten oder für eine Gruppierung der allgemeinen Formeln NR³R⁴ oder OR³ stehen,
R³ für Wasserstoff, C₁-C₄ Alkyl, oder gegebenenfalls durch SO₃M substituiertes Phenyl oder Naphthyl steht,
R⁴ eine der Bedeutungen von R³ hat oder für Phenyl, Naphthyl oder Alkyl, die durch SO₂Y, SO₃M oder OCH₃ substituiert sein können, gegebenenfalls substituiertes Morpholino oder Pyrimidino oder für NHCN steht,
Y, Y¹ und Y² unabhängig voneinander Vinyl bedeuten oder für eine Gruppierung der allgemeinen Formel CH₂CH₂Z stehen,
Z für eine Gruppierung steht, die durch Einwirkung von Alkali eliminiert werden kann und
M für ein Wasserstoffatom, ein Ammonium Ion oder das Äquivalent eines Alkali- oder Erdalkalimetalls steht.

Im allgemeinen sind der Azofarbstoff der allgemeinen Formel (1) und der Azofarbstoff der allgemeinen Formel (2) in den erfindungsgemäßen Mischungen in einem Mischungsverhältnis von 90:10 Gew.-% bis 10:90 Gew.-%, bevorzugt im Verhältnis von 70:30 Gew.-% bis 30:70 Gew.-%, enthalten. Besonders bevorzugt sind sie in den erfindungsgemäßen Mischungen in einem Verhältnis von 55:45 bis 45:55 Gew.-% enthalten.

Für R₃, R₄, R₅ oder R₆ stehendes C₁-C₄ Alkyl kann geradkettig oder verzweigt und Methyl, Ethyl, Propyl oder Butyl sein, wobei Ethyl und insbesondere Methyl bevorzugt sind.
Für R₄ stehendes Alkyl hat bevorzugt 1 oder 2 Kohlenstoffatome und ist besonders bevorzugt Ethyl.
Für R₄ stehendes Morpholino oder Pyridino kann beispielsweise durch Carboxy substituiert sein. Eine für Z stehende Gruppierung, die durch Einwirkung von Alkali eliminiert
werden kann, ist insbesondere Sulfato der Formel -OSO₃M, Thiosulfato der Formel -SSO₃M und Acetyloxy der Formel -OCOCH₃, wobei M wie oben angegeben definiert ist.

Die Gruppen -SO₂Y, -SO₂Y¹ und -SO₂Y² stehen bevorzugt in meta- oder para-Position zur Azo- bzw. Aminogruppe.

Bevorzugte erfindungsgemäße Farbstoffmischungen enthalten Azofarbstoffe der allgemeinen Formeln (1) und (2), worin
- p: 2 ist, wobei die beiden Gruppen -SO₃M in Position 1 und 5 stehen
- R¹, R^{1'}, R², R⁵ und R⁶: für Wasserstoff stehen,
- X¹ und X²: Chlor oder Fluor bedeuten,
- Y, Y¹ und Y²: -C₂H₄OSO₃M sind und
- M: Wasserstoff, Li oder Na bedeutet.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die erfindungsgemäßen Farbstoffmischungen als Farbstoffpulver vor, die einen Gehalt an Elektrolytsalzen, die auch als Stellmittel bezeichnet werden, von 10 bis 80 Gew.-%, bezogen auf das Farbstoffpulver, aufweisen. Diese Farbstoffpulver können zudem die erwähnten Puffersubstanzen in einer Gesamtmenge von bis zu 5 Gew.-%, bezogen auf das Farbstoffpulver enthalten. Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt. Die wäßrigen Lösungen (Flüssigpräparationen) können die erwähnten Puffersubstanzen in der Regel in einer Menge von bis zu 10 Gew.-%, bevorzugt bis zu 2 Gew.-%, enthalten.

Die erfindungsgemäßen Farbstoffmischungen können in üblicher Weise hergestellt werden, so durch mechanisches Mischen der einzelnen aus den obengenannten EP-As bekannten in fester oder in flüssiger Form vorliegenden Farbstoffe in den erforderlichen Anteilen oder durch Synthese mittels der üblichen Diazotierungs- und Kupplungsreaktionen und Umsetzungsreaktionen mit der Halogentriazinkomponente unter Verwendung von entsprechenden Mischungen solcher Komponenten in einer dem Fachmann geläufigen Weise und mit den hierzu erforderlichen Mengenanteilen.

So kann man beispielsweise in der Weise vorgehen, daß man eine Verbindung der allgemeinen Formel (3A) 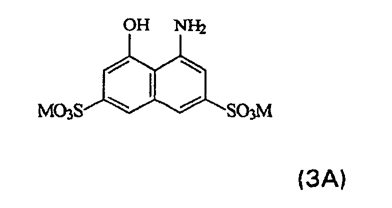 worin M wie oben angegeben definiert ist, mit Trihalogentriazin, insbesondere Trichlor- oder Trifluortriazin, in bekannter Verfahrensweise, wie beispielsweise bei einer Temperatur zwischen -10 und 60°C, bevorzugt zwischen 0 und 40°C, und einem pH-Wert zwischen 0 und 8, bevorzugt zwischen 3 und 5, umsetzt und anschließend das erhaltene Produkt mit einer Mischung aus einer oder mehreren Aminoverbindungen der allgemeinen Formel (3B) und einer oder mehreren Aminoverbindungen der allgemeinen Formel (3C) 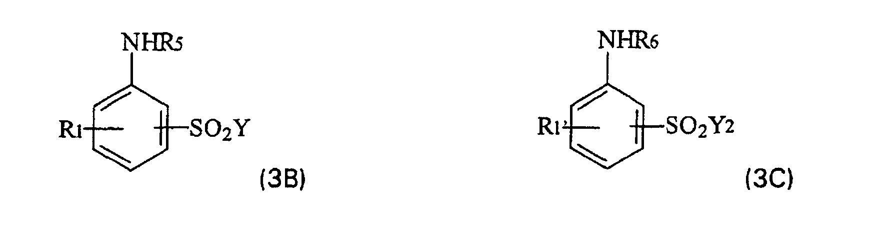 worin R¹, R^{1'}, R⁵, R⁶, Y und Y² wie oben angegeben definiert sind, in bekannter Verfahrensweise, wie beispielsweise bei einer Temperatur zwischen 0 und 60°C, bevorzugt zwischen 0 und 40°C, und einem pH-Wert zwischen 2 und 8, bevorzugt zwischen 3 und 5, umsetzt. Die so erhaltenen Diamino-Halogentriazinverbindungen können dann mit einer Diazoniumsalzmischung, die aus einem Amin der allgemeinen Formel (3D) 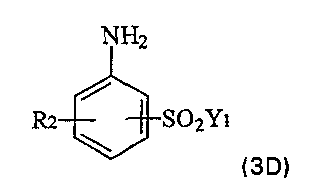 und einem Naphtylamin der allgemeinen Formel (3E) 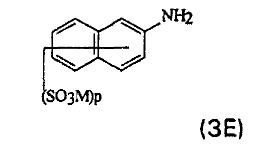 worin R², Y¹, M und p wie oben angegeben definiert sind, in wohlbekannter Weise hergestellt wurde, zu der erfindungsgemäßen Mischung der Azofarbstoffe 1 und 2 in bekannter Verfahrensweise, beispielsweise bei einer Temperatur zwischen 10 und 50°C, bevorzugt zwischen 20 und 35°C, und bei einem pH-Wert zwischen 3 und 7, bevorzugt zwischen 4 und 5, umsetzt werden. Farbstoffe der allgemeinen Formeln 1 und 2 in denen X¹ und X² nicht Halogen ist, werden durch Umsetzung der Mischung mit den Verbindungen HOR³ oder HNR³R⁴, worin R³ und R⁴ wie oben angegeben definiert sind, in bekannter Weise, beispielsweise bei einer Temperatur zwischen 10 und 100°C, bevorzugt zwischen 40 und 80°C, und bei einem pH-Wert zwischen 3 und 7, bevorzugt zwischen 4 und 5, hergestellt.

Ausgangsverbindungen der allgemeinen Formel (3A) sind beispielsweise das Natrium- und das Kaliumsalz des 8-Hydroxy-3,5-disulfonsäure-1-naphtylamins oder bevorzugt das 8-Hydroxy-3,5-disulfonsäure-1-naphtylamin selbst. Ausgangsverbindungen der allgemeinen Formel (3B), (3C) und (3D) sind beispielsweise 4-(β-Sulfatoethylsulfonyl)-anilin, 3-(β-Sulfatoethylsulfonyl)-anilin, 4-(β-Sulfatoethylsulfonyl)-2-aminoanisol, 3-(β-Sulfatoethylsulfonyl)-5-aminoanisol, 2-Sulfonsäure-4-(β-sulfatoethylsulfonyl)-anilin, 2-Sulfonsäure-5-(β-sulfatoethylsulfonyl)-anilin, sowie Derivate dieser Verbindungen, in welchen die β-Sulfatoethylsulfonyl-Gruppe durch die Vinylsulfonyl-, β-Thiosulfatoethylsulfonyl- oder β-Chlorethylsulfonyl-Gruppe ausgetauscht ist. Eine bevorzugte Ausgangsverbindung ist 4-(β-Sulfatoethylsulfonyl)-anilin. Ausgangsverbindungen der allgemeinen Formel (3E) sind beispielsweise 2-Naphthylamin-1-sulfonsäure, 2-Naphthylamin-1,5-disulfonsäure, 2-Naphthylamin-1,4-disulfonsäure und 2-Naphthylamin-6,8-disulfonsäure.

Die Abscheidung der auf chemischem Wege hergestellten erfindungsgemäßen Farbstoffmischungen aus deren Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen oder Sprühtrocknung der Reaktionslösung, wobei dieser Reaktionslösung eine Puffersubstanz zugefügt werden kann.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber zum Färben oder bedrucken dieser Materialien in Faserform verwendet. Auch können die bei der Synthese anfallenden Lösungen der erfindungsgemäßen Farbstoffmischungen, gegebenenfalls nach Zusatz einer Puffersubstanz, gegebenenfalls auch nach Konzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien können natürlichen oder synthetischen Ursprungs sein, wie beispielsweise Cellulosefasermaterialien, deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.
So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten, gegenüber den Einzelfarbstoffen verbesserten Farbausbeuten. Man färbt bevorzugt in wäßrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln.

Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die erfindungsgemäßen Farbstoffmischungen zeichnen sich auf den Cellulosefasermaterialien bei Anwendung in den Färbe- und Druckverfahren durch eine hohe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhaltenen Färbungen und Drucke besitzen klare Nuancen. Insbesondere weisen die Färbungen und Drucke auf Cellulosefasermaterialien eine gute Lichtechtheit und sehr gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colourists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperaturvon etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, klare gelb- bis blaustichig rote Färbungen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der freien Säuren angegeben. im allgemeinen werden sie in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

### Beispiel 1

a) In eine Suspension aus 319,2 Teilen 1-Amino-8-naphthol-3,6-disulfonsäure in 1000 Teilen Wasser und 300 Teilen Eis werden unter gutem Rühren 190,1 Teile Cyanurchlorid eingetragen. Der Reaktionsansatz wird noch vier Stunden zwischen 0 und 15°C und mittels Natriumbicarbonat bei einem pH-Wert zwischen 1,7 und 2,2 weitergerührt.
b) Die Lösung der gemäß a) erhaltenen Dichlortriazinverbindung wird mit einer Lösung mit einem pH-Wert von 5,5 bis 6,0 von 281,0 Teilen 4-(ß-Sulfatoethylsulfonyl)-anilin in 640 Teilen Wasser vereinigt. Der pH-Wert wird auf etwa 5 gehalten und das Reaktionsgemisch im Verlaufe von ein bis zwei Stunden auf eine Temperatur von 30 bis 45°C erwärmt.
c) Eine Lösung mit einem pH-Wert von 6,7 bis 6,8 von 140,5 Teilen 4-(β-Sulfatoethylsulfonyl)-anilin und 151.5 Teilen 2-Naphtylamin-1,5-disulfonsäure in 500 Teilen Wasser werden mit 171 Teilen einer 40 %igen wäßrigen Natriumnitritlösung versetzt. Dieses Gemisch wird unter gutem Rühren in eine Mischung aus 800 Teilen zerkleinertem Eis und 160 Teilen einer 31 %igen wäßrigen Satzsäure einfließen lassen. Man rührt noch eine Stunde bei einer Temperatur zwischen 0°C und 5°C nach und zersetzt sodann, wie üblich, überschüssige salpetrige Säure mit wenig Amidosulfonsäure.
c) Das gemäß b) hergestellte sekundäre Kondensationsprodukt wird mit der gemäß c) hergestellten Diazoniumsalzlösung vereinigt. Zur Durchführung der Kupplungsreaktion wird das stark saure Reaktionsgemisch bei einer Temperatur von etwa 15°C mittels Natriumcarbonat auf einen pH-Wert von 4,5 bis 6,5 eingestellt und die Temperatur auf 20 bis 25°C erhöht. Es wird noch einige Stunden bei diesem pH-Wert und dieser Temperatur weitergerührt, bis die Kupplung beendet ist.
d) Sodann wird mittels Natriumcarbonat ein pH-Wert zwischen 6,0 und 6,5 eingestellt, der Ansatz klärfiltriert und das Filtrat sprühgetrocknet.

Es werden etwa 1650 Teile eines Elektrolytsalz- (vorwiegend Natriumchlorid und Natriumsulfat) haltigen Pulvers erhalten, das zu etwa 40 % das Natriumsalz der Verbindung der Formel (1a) 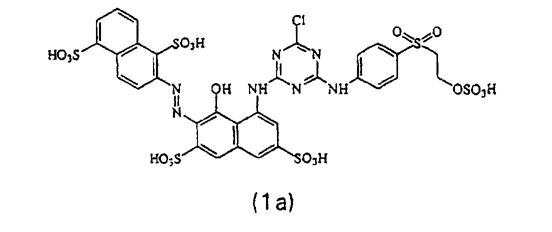 und zu etwa 40% das Natriumsalz der Verbindung der Formel (2a) 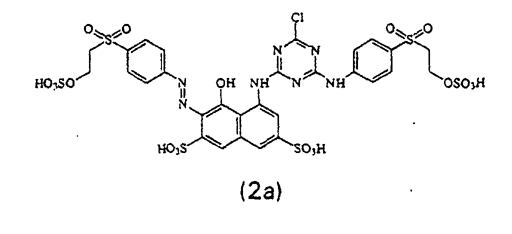 enthält. Diese Mischung zeigt sehr gute Farbstoffeigenschaften und liefert nach den in der Technik üblichen Anwendungs- und Fixiermethoden für faserreaktive Farbstoffe auf den in der Beschreibung genannten Materialien, wie Cellulosefasermaterialien, insbesondere Baumwolle und Viskose, farbstarke rote Färbungen und Drucke mit sehr guten Echtheitseigenschaften, von denen vor allem die sehr guten Wasch-, Licht-, Alkali-, Säure-, Wasser-, Meerwasser-, Schweiß- und Reibechtheiten hervorgehoben werden können. Die Färbungen zeichnen sich weiterhin durch ihren hohen Fixiergrad und guten Aufbau auf den Cellulosematerialien aus.

### Beispiel 2

Man trägt unter gutem Rühren 47.5 Teile Cyanurchlorid und 79,8 Teile 1-Amino-8-naphthol-3,6-disulfonsäure schnell in eine Mischung aus 330 Teilen Wasser und 140 Teilen Eis ein, rührt den Ansatz,noch etwa. 3,5 Stunden bei einem pH-Wert zwischen 1,5 und 2,0 und einer Temperatur zwischen 10 und 15°C weiter und klärt die Lösung dieses primären Kondensationsproduktes mittels Kieselgur und Filtration.
Sodann stellt man den pH-Wert mittels Calciumcarbonat auf 5 und gibt 70,3 Teile 3-(β-Sulfatoethylsulfonyl)-anilin hinzu, rührt den Ansatz zwei bis drei Stunden bei einer Temperatur von 18 bis 22°C, erwärmt ihn dann auf 50 bis 55°C und hält ihn unter Konstanthaltung des pH-Wertes von 4,0 bis 4,5 mittels Calciumcarbonat während 30 Minuten bei dieser Temperatur. Man rührt noch einige Stunden bei 18 bis 20°C
Man vereinigt die Lösung mit einer auf üblichem Wege durch Diazotierung mittels Natriumnitrit und Schwefelsäure in wäßrigem Medium hergestellten Suspension des Diazoniumsalzes aus 35 Teilen 3-(β-Sulfatoethylsulfonyl)-anilin und 38 Teilen 2-Naphtylamin-1,5-disulfonsäure, stellt das stark saure Kupplungsgemisch sodann bei einer Temperatur von etwa 10°C auf einen pH-Wert von 4,0 bis 6,5 mittels Calciumcarbonat und rührt noch einige Stunden bei 10 bis 14°C und innerhalb dieses pH-Bereiches weiter. Man saugt das Calciumsulfat ab, wäscht es mit Wasser nach und fällt in diesem vereinigten Filtrat und Waschwasser die Calciumionen mittels Natriumoxalat bei einem pH-Wert von 4,5 bis 5,0 und einer Temperatur von 30°C. Nach einstündigem Rühren filtriert man ab und isoliert die erfindungsgemäße Farbstoffmischung aus dem Filtrat durch Sprühtrocknung.

Man erhält etwa 280 Teile eines dunkelroten Pulvers, das neben Elektrolytsalzen etwa 44 %ig an dem Natriumsalz der Verbindung der Formel (1b) 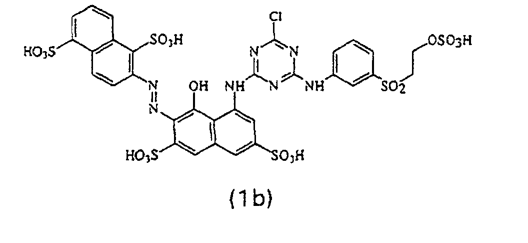 und etwa 40%ig an dem Natriumsalz der Verbindung der Formel (2b) 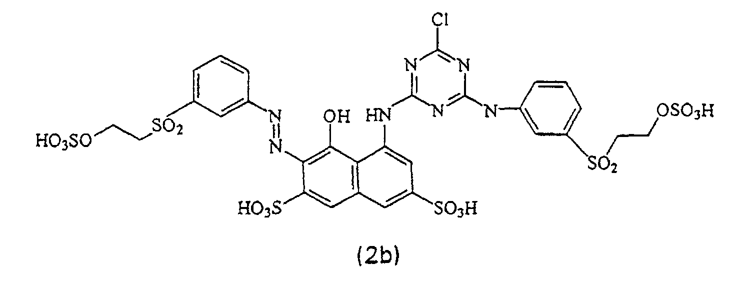 ist. Diese erfindungsgemäße Farbstoffmischung Farbstoffmischung besitzt sehr gute anwendungstechnische Eigenschaften und liefert nach den in der Technik üblichen Druck- und Färbeweisen für faserreaktive Farbstoffe beispielsweise auf Cellulosefasermaterialien farbstarke rote Färbungen und Drucke von sehr guten Fabrikations- und Gebrauchsechtheiten, unter denen die Lichtechtheit, die Wasch-, Schweiß-, Wasser- und Meerwasserechtheiten sowie die Beständigkeit gegen gechlortes Trinkwasser (Chlorbadewasser) besonders erwähnt werden können. Die Fixierquote dieser erfindungsgemäßen Farbstoffmischung auf Cellulosefasermaterialien ist sehr hoch.

### Beispiele 3 bis 46

In den nachfolgenden Tabellenbeispielen sind weitere erfindungsgemäße Farbstoffmischungen aus Farbstoffen der allgemeinen Formeln (1) und (2) beschrieben. Sie lassen sich in erfindungsgemäßer Weise entweder durch mechanische Mischung der Einzelfarbstoffe oder aber auf chemischem Wege, beispielsweise analog einem der obigen Ausführungsbeispiele aus den Ausgangskomponenten (Cyanurchlorid oder Cyanurfluorid, 1-Amino-8-naphthol-3,6-disulfonsäure, Aminoverbindungen der Formeln 3B und 3C als zweite Kondensationskomponenten und Aminoverbindungen der Formeln 3D und 3E als Diazokomponenten und gegebenenfalls mit einem Amin der allgemeinen Formel HNR³R⁴ oder Alkohol der allgemeinen Formel HOR³) herstellen.
Die erfindungsgemäßen Farbstoffmischungen besitzen sehr gute anwendungstechnische Eigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheitseigenschaften und einem guten Farbaufbau in dem in dem jeweiligen Tabellenbeispiel angegebenen Farbton.
Die in der Rubrik MV angegebenen Zahlenverhältnisse geben das Gewichtsverhältnis in Prozent des bzw. der Farbstoffe der allgemeinen Formel (1) zu dem bzw. den Farbstoffen der allgemeinen Formel (2) an, in welchem die Farbstoffe in der jeweiligen Farbstoffmischung vorliegen.

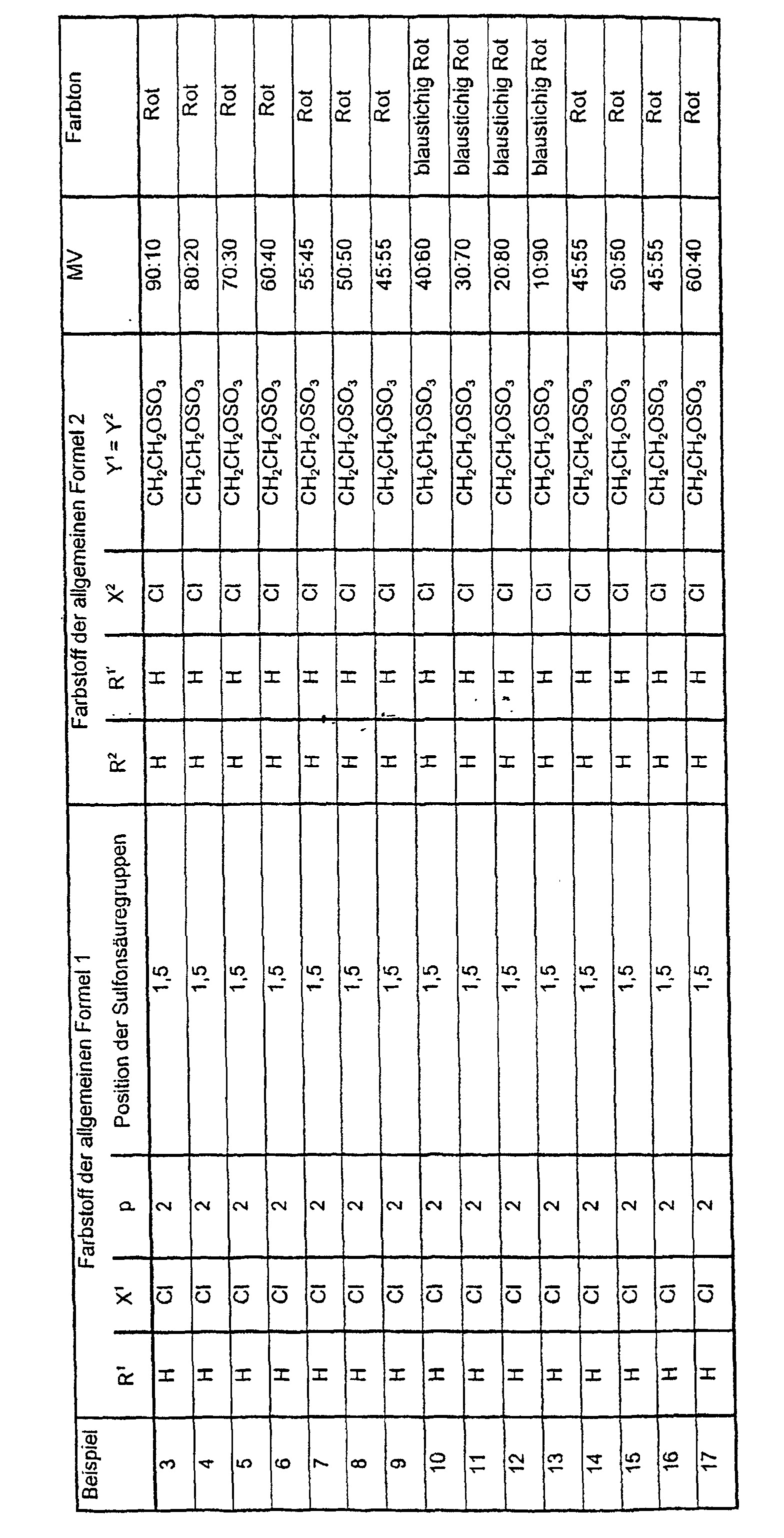

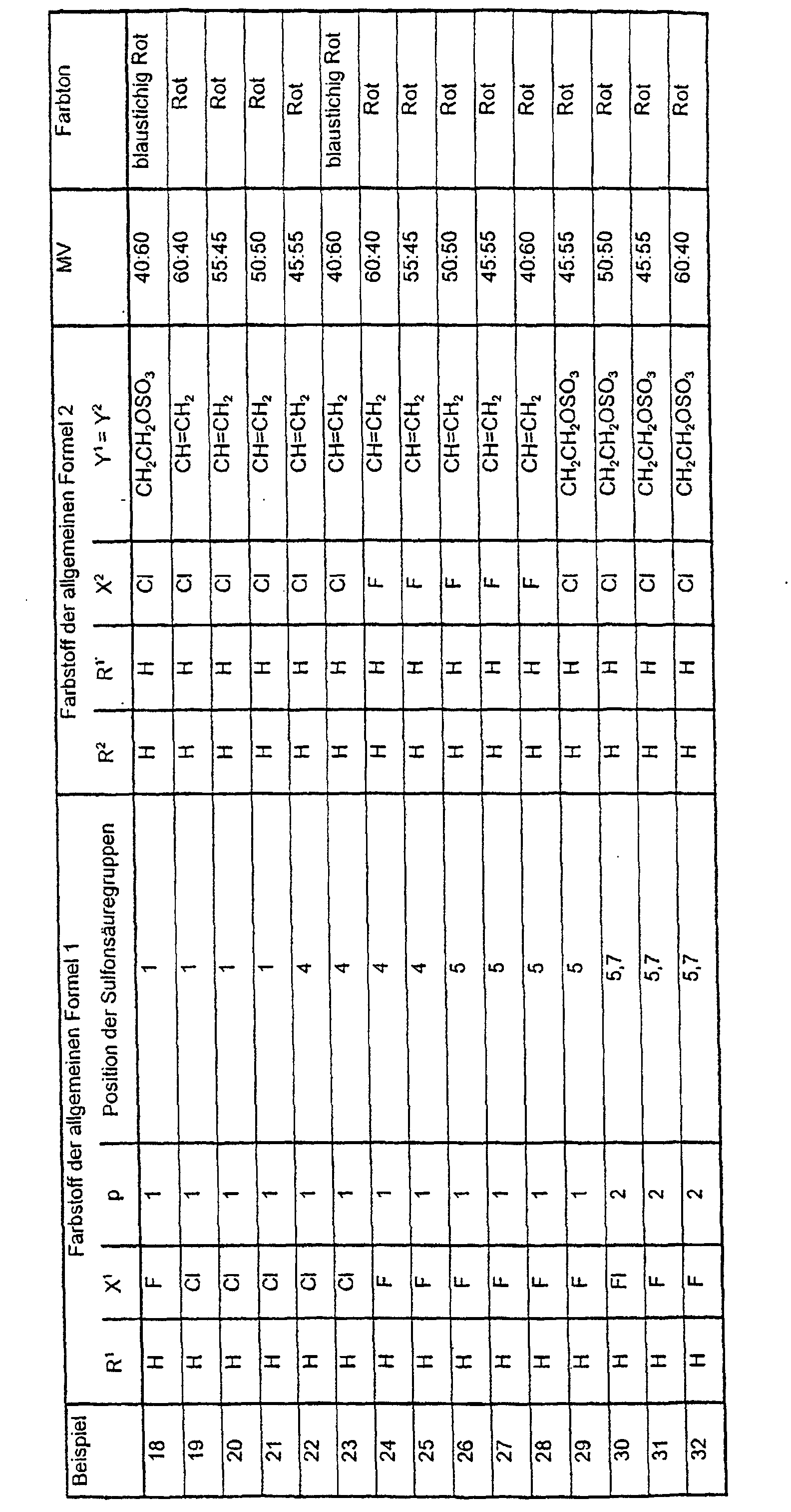

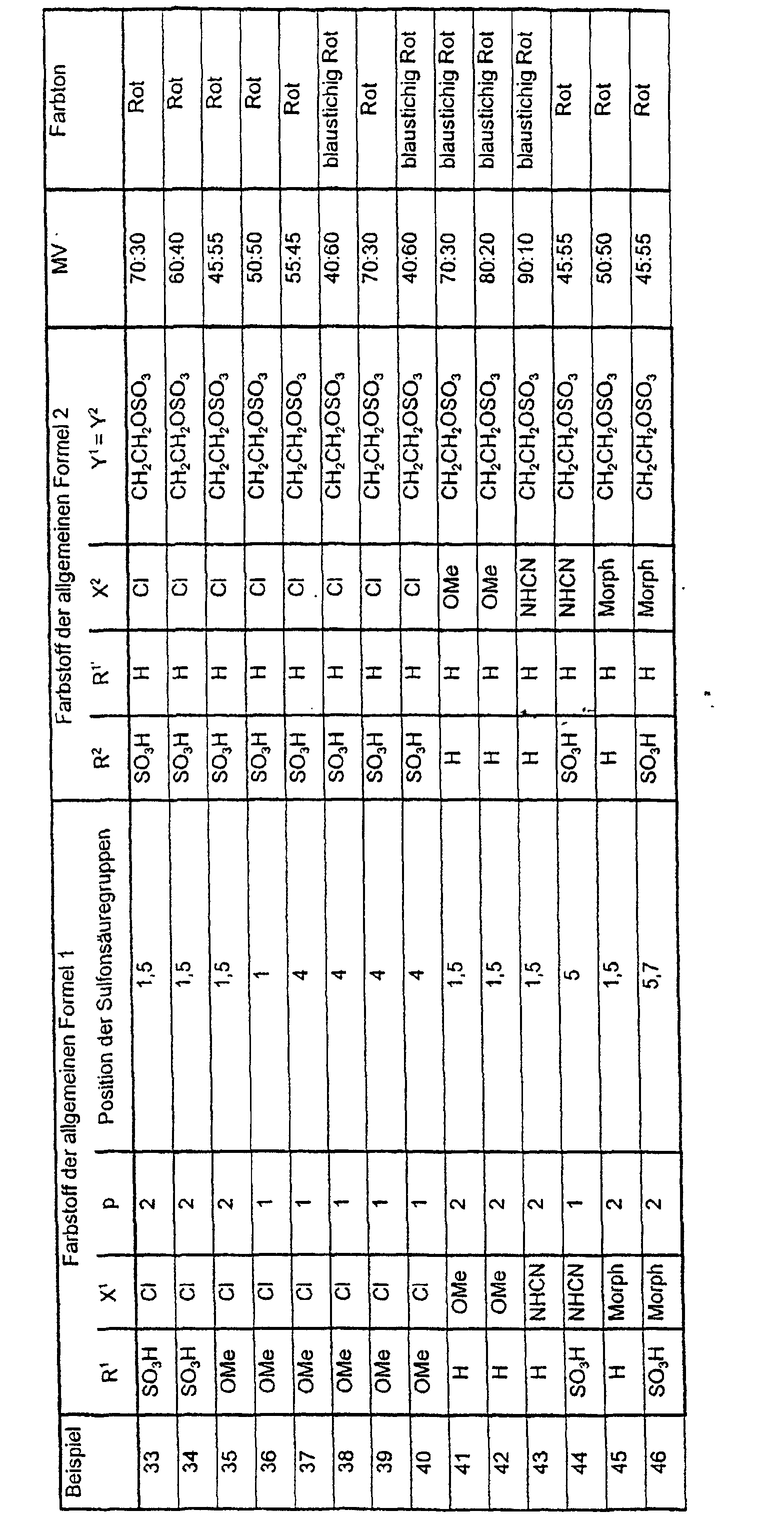

## Patentansprüche

1. Farbstoffmischungen, enthaltend einen oder mehrere Azofarbstoffe der allgemeinen Formel (1) und einen oder mehrere Azofarbstoffe der allgemeinen Formel (2) 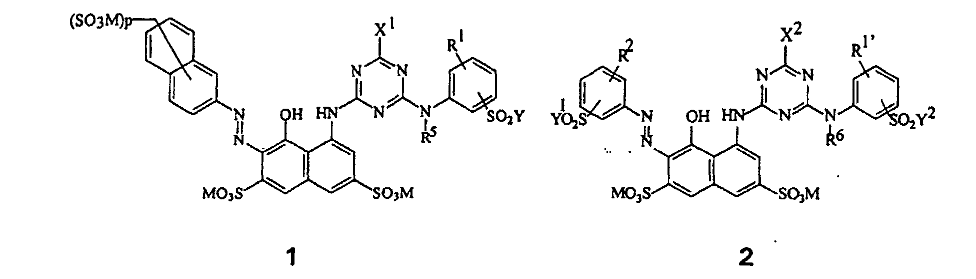 worin
p 1 oder 2 ist,
R¹, R^{1'} und R² unabhängig voneinander für Wasserstoff, eine Gruppe der allgemeinen Formel SO₃M oder OCH₃ stehen,
R⁵ und R⁶ unabhängig voneinander für Wasserstoff oder C₁-C₄ Alkyl stehen,
X¹ und X² unabhängig voneinander Fluor oder Chlor bedeuten oder für eine Gruppierung der allgemeinen Formeln NR³R⁴ oder OR³ stehen,
R³ für Wasserstoff, C₁-C₄ Alkyl, oder gegebenenfalls durch SO₃M substituiertes Phenyl oder Naphthyl steht,
R⁴ eine der Bedeutungen von R³ hat oder für Phenyl, Naphtyl oder Alkyl, die durch SO₂Y, SO₃M oder OCH₃ substituiert sein können, gegebenenfalls substituiertes Morpholino oder Pyrimidino oder für NHCN steht,
Y, Y¹ und Y² unabhängig voneinander Vinyl bedeuten oder für eine Gruppierung der allgemeinen Formel CH₂CH₂Z stehen,
Z für eine Gruppierung steht, die durch Einwirkung von Alkali eliminiert werden kann und
M für ein Wasserstoffatom, ein Ammonium Ion oder das Äquivalent eines Alkali- oder Erdalkalimetalls steht.

2. Farbstoffmischungen nach Anspruch 1, **dadurch gekennzeichnet, daß** das Mischungsverhältnis des Azofarbstoffs der allgemeinen Formel 1 zu dem Azofarbstoff der allgemeinen Formel 2 90:10 Gew.-% bis 10:90 Gew.-% ist.

3. Farbstoffmischungen nach Anspruch 1, **dadurch gekennzeichnet, daß** das Mischungsverhältnis des Azofarbstoffs der allgemeinen Formel 1 zu dem Azofarbstoff der allgemeinen Formel 2 70:30 Gew.-% bis 30:70 Gew.-% ist.

4. Farbstoffmischungen nach Anspruch 1, **dadurch gekennzeichnet, daß** das Mischungsverhältnis des Azofarbstoffs der allgemeinen Formel 1 zu dem Azofarbstoff der allgemeinen Formel 2 55:45 Gew.-% bis 45:55 Gew.-% ist.

5. Farbstoffmischungen nach einem oder mehreren der Ansprüche 1 bis 4, **dadurch gekennzeichnet, daß**
p 2 ist, wobei die beiden Gruppen -SO₃M in Position 1 und 5 stehen
R¹, R^{1'}, R², R⁵ und R⁶ für Wasserstoff stehen,
X¹ und X² Chlor oder Fluor bedeuten,
Y, Y¹ und Y² -C₂H₄OSO₃M sind und
M Wasserstoff, Li oder Na bedeutet.

6. Verfahren zur Herstellung einer Farbstoffmischung nach einem oder mehreren der Ansprüche 1 bis 5, **dadurch gekennzeichnet, daß** man die in fester oder in flüssiger Form vorliegenden Azofarbstoffe der allgemeinen Formeln 1 und 2 in den erforderlichen Anteilen mechanisch mischt.

7. Verfahren zur Herstellung einer Farbstoffmischung nach einem oder mehreren der Ansprüche 1 bis 5, **dadurch gekennzeichnet, daß** man eine Verbindung der allgemeinen Formel (3A) 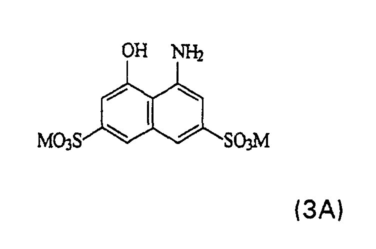 worin M wie in Anspruch 1 angegeben definiert ist, mit einem Trihalogentriazin in bekannter Verfahrensweise umsetzt und anschließend das erhaltene Produkt mit einer Mischung aus einer oder mehreren Aminoverbindungen der allgemeinen Formel (3B) und einer oder mehreren Aminoverbindungen der allgemeinen Formel (3C) 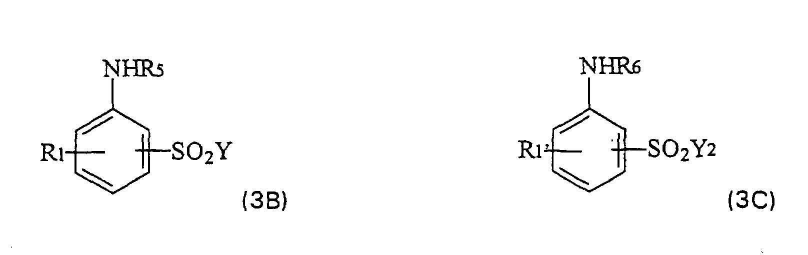 worin R¹, R^{1'}, R⁵, R⁶, Y und Y² wie in Anspruch 1 angegeben definiert sind, in bekannter Verfahrensweise umsetzt und die so erhaltenen Diamino-Halogentriazinverbindungen dann mit einer Diazoniumsalzmischung, die aus einem Amin der allgemeinen Formel (3D) 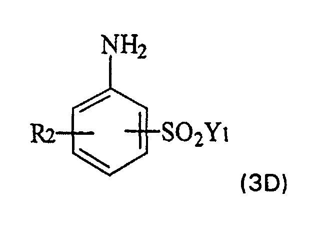 und einem Naphtylamin der allgemeinen Formel (3E) 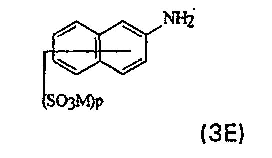 worin R², Y¹, M und p wie in Anspruch 1 angegeben definiert sind, in wohlbekannter Weise hergestellt wurde, zu der Mischung der Azofarbstoffe 1 und 2 in bekannter Verfahrensweise umsetzt und gegebenenfalls die erhaltene Mischung mit Verbindungen HOR³ oder HNR³R⁴, worin R³ und R⁴ wie in Anspruch 1 angegeben definiert sind, in bekannter Weise umsetzt.

8. Verwendung der Farbstoffmischungen nach einem oder mehreren der Ansprüche 1 bis 5 zum Färben oder Bedrucken von hydroxy- und/oder carbonamidgruppenhaltigem Material, vorzugsweise Fasermaterial.

9. Verfahren zum Färben oder Bedrucken von hydroxy- und/oder carbonamidgruppenhaltigem Material, vorzugsweise Fasermaterial, bei welchem man einen oder mehrere Farbstoffe in gelöster Form auf das Material aufbringt und den oder die Farbstoffe auf dem Material mittels Wärme oder mit Hilfe eines alkalisch wirkenden Mittels oder mittels beider Maßnahmen fixiert, **dadurch gekennzeichnet, daß** man Farbstoffmischungen gemäß einem oder mehreren der Ansprüche 1 bis 5 einsetzt.

## Claims

1. Dye mixtures comprising one or more azo dyes of the general formula (1) and one or more azo dyes of the general formula (2) 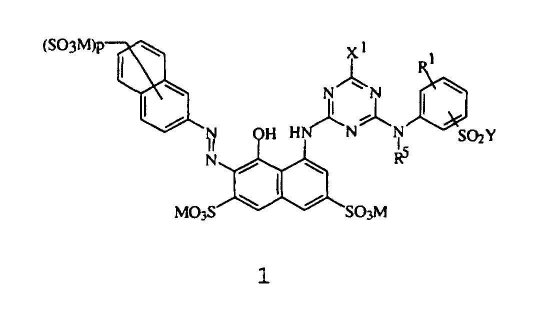 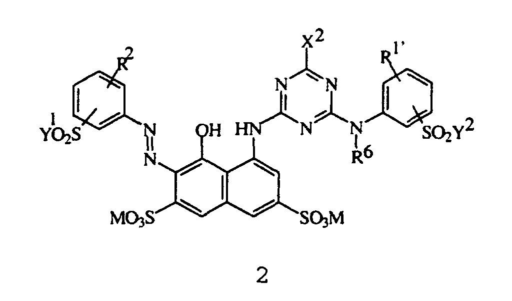 where
p is 1 or 2,
R¹, R^{1'} and R² are independently hydrogen or a group of the general formula SO₃M or OCH₃,
R⁵ and R⁶ are independently hydrogen or C₁-C₄ alkyl,
X¹ and X² are independently fluorine or chlorine or a grouping of the general formula NR³R⁴ or OR³,
R³ is hydrogen, C₁-C₄ alkyl or optionally SO₃M- substituted phenyl or naphthyl,
R⁴ has one of the meanings of R³ or is phenyl, naphthyl or alkyl (which may each be substituted by SO₂Y, SO₃M or OCH₃), optionally substituted morpholino or pyrimidino or NHCN,
Y, Y¹ and Y² are independently vinyl or a grouping of the general formula CH₂CH₂Z,
Z is a grouping which can be eliminated by the action of alkali, and
M is a hydrogen atom, an ammonium ion or the equivalent of an alkali or alkaline earth metal.

2. Dye mixtures as claimed in claim 1, wherein the mixing ratio of the azo dye of the general formula 1 to the azo dye of the general formula 2 is within the range from 90:10% by weight to 10:90% by weight.

3. Dye mixtures as claimed in claim 1, wherein the mixing ratio of the azo dye of the general formula 1 to the azo dye of the general formula 2 is within the range from 70:30% by weight to 30:70% by weight.

4. Dye mixtures as claimed in claim 1, wherein the mixing ratio of the azo dye of the general formula 1 to the azo dye of the general formula 2 is within the range from 55:45% by weight to 45:55% by weight.

5. Dye mixtures as claimed in one or more of claims 1 to 4, wherein
p is 2, and the two -SO₃M groups are in positions 1 and 5,
R¹, R^{1'}, R², R⁵ and R⁶ are each hydrogen,
X¹ and X² are each chlorine or fluorine,
Y, Y¹ and Y² are each -C₂H₄OSO₃M, and
M is hydrogen, lithium or sodium.

6. A process for preparing a dye mixture as set forth in one or more of claims 1 to 5, which comprises mechanically mixing requisite amounts of the azo dyes of the general formulae 1 and 2 in solid or liquid form.

7. A process for preparing a dye mixture as set forth in one or more of claims 1 to 5, which comprises reacting a compound of the general formula (3A) 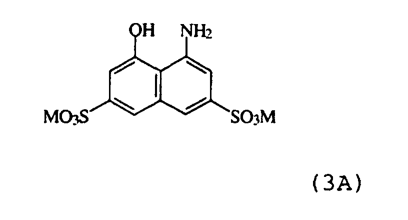 where M is as defined in claim 1, with a trihalotriazine, in a known manner, and subsequently reacting the resulting product with a mixture of one or more amino compounds of the general formula (3B) and one or more amino compounds of the general formula (3C) 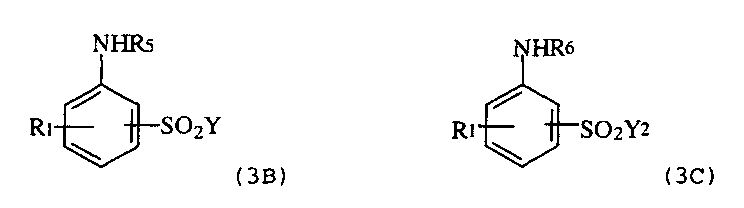 where R¹, R^{1'}, R⁵, R⁶, Y and Y² are each as defined in claim 1, in a known manner, and then reacting the resulting diaminohalotriazine compounds with a diazonium salt mixture prepared in a well known manner from an amine of the general formula (3D) 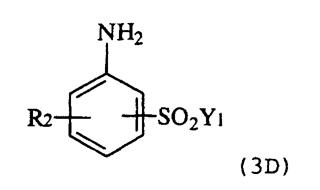 and a naphthylamine of the general formula (3E) 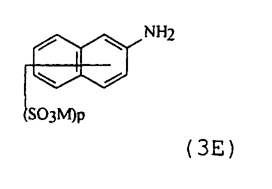 where R², Y¹, M and p are each as defined in claim 1, in a known manner, to form the mixture of the azo dyes 1 and 2 and, if necessary, reacting the resulting mixture with compounds HOR³ or HNR³R⁴, where R³ and R⁴ are each as defined in claim 1, in a known manner.

8. The use of the dye mixtures of one or more of claims 1 to 5 for dyeing or printing hydroxyl- and/or carboxamido-containing material, preferably fiber material.

9. A process for dyeing or printing hydroxyl- and/or carboxamido-containing material, preferably fiber material, by applying one or more dyes in dissolved form to the material and fixing the dye or dyes on the material by means of heat or with the aid of an alkaline agent or by means of both measures, which comprises using dye mixtures as set forth in one or more of claims 1 to 5.

## Revendications

1. Mélanges de colorants contenant un ou plusieurs colorants azoïques de formule générale (1) et un ou plusieurs colorants azoïques de formule générale (2) 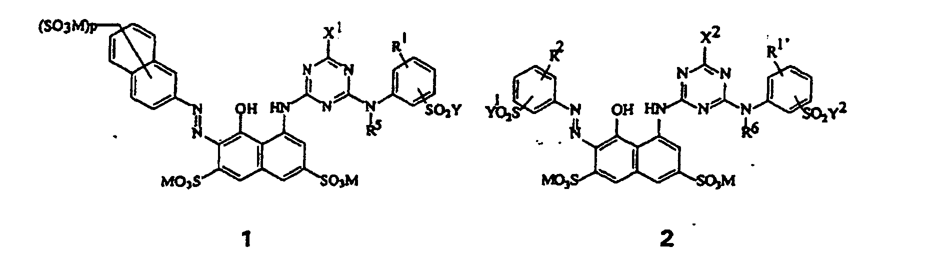 dans lesquelles
p est 1 ou 2,
R¹, R¹' et R² représentent, indépendamment les uns des autres, un atome d'hydrogène, un groupe de formule générale SO₃M ou OCH₃,
R⁵ et R⁶ représentent, indépendamment l'un de l'autre, un atome d'hydrogène ou un groupe alkyle en C₁-C₄,
X¹ et X² représentent, indépendamment l'un de l'autre, un atome de fluor ou de chlore ou un groupement de formule générale NR³R⁴ ou OR³,
R³ représente un atome d'hydrogène ou un groupe alkyle en C₁-C₄ ou un groupe phényle ou naphtyle éventuellement substitué par SO₃M,
R⁴ a l'une des significations de R³ ou représente le groupe phényle, naphtyle ou un groupe alkyle, qui peuvent être substitués par SO₂Y, SO₂M ou OCH₃, un groupe morpholino ou pyrimidino éventuellement substitué ou NHCN,
Y, Y¹ et Y² représentent, indépendamment les uns des autres, le groupe vinyle ou un groupement de formule générale CH₂CH₂Z,
Z représente un groupement qui peut être éliminé par un alcali, et
M représente un atome d'hydrogène, un ion ammonium ou l'équivalent d'un métal alcalin ou alcalino-terreux.

2. Mélanges de colorants selon la revendication 1, **caractérisés en ce que** le rapport de mélange du colorant azoïque de formule générale 1 au colorant azoïque de formule générale 2 va de 90:10 % en poids à 10:90 % en poids.

3. Mélanges de colorants selon la revendication 1, **caractérisés en ce que** le rapport de mélange du colorant azoïque de formule générale 1 au colorant azoïque de formule générale 2 va de 70:30 % en poids à 30:70 % en poids.

4. Mélanges de colorants selon la revendication 1, **caractérisés en ce que** le rapport de mélange du colorant azoïque de formule générale 1 au colorant azoïque de formule générale 2 va de 55:45 % en poids à 45:55 % en poids.

5. Mélanges de colorants selon une ou plusieurs des revendications 1 à 4, **caractérisés en ce que**
p est 2, les deux groupes -SO₃M étant en position 1 et 5,
R¹, R^{1'}, R², R⁵ et R⁶ représentent des atomes d'hydrogène,
X¹ et X² représente l'atome de chlore ou de fluor,
Y, Y¹ et Y² sont -C₂H₄OSO₃M et
M représente un atome d'hydrogène, de Li ou Na.

6. Procédé pour la préparation d'un mélange de colorants selon une ou plusieurs des revendications 1 à 5, **caractérisé en ce qu'**on mélange mécaniquement les colorants azoïques de formules générales 1 et 2, se trouvant sous forme liquide ou solide, en les proportions requises.

7. Procédé pour la préparation d'un mélange de colorants selon une ou plusieurs des revendications 1 à 5, **caractérisé en ce qu'**on fait réagir selon un mode opératoire connu un composé de formule générale (3A) 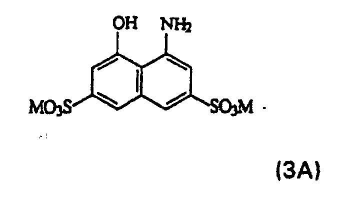 dans laquelle M est défini comme indiqué dans la revendication 1, avec une trihalogénotriazine, et on fait ensuite réagir le produit obtenu, selon un mode opératoire connu, avec un mélange d'un ou plusieurs composés aminés de formule générale (3B) et d'un ou plusieurs composés aminés de formule générale (3C) 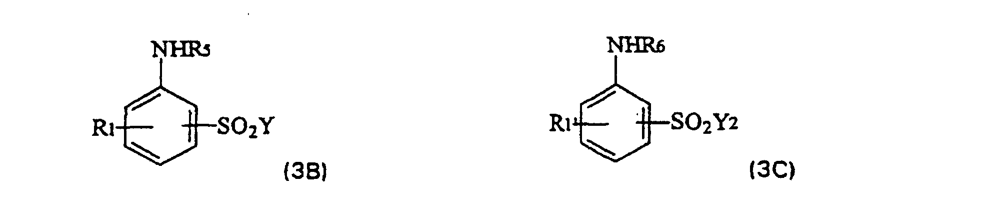 où R¹, R^{1'}, R⁵, R⁶, Y et Y² sont tels que définis dans la revendication 1, et on fait ensuite réagir selon un mode opératoire connu les composés de type diaminohalogénotriazine ainsi obtenus avec un mélange de sels de diazonium qui a été préparé, de façon bien connue, à partir d'une amine de formule générale (3D) 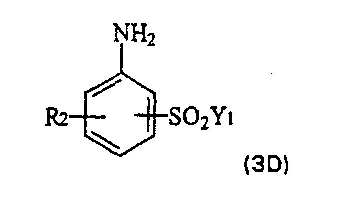 et d'une naphtylamine de formule générale (3E) 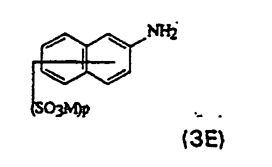 où R², Y¹, M et p sont définis comme dans la revendication 1, pour aboutir au mélange des colorants azoïques 1 et 2, et on fait éventuellement réagir d'une façon connue le mélange obtenu avec des composés HOR³ ou HNR³R⁴ dans lesquels R³ et R⁴ sont définis comme indiqué dans la revendication 1.

8. Utilisation des mélanges de colorants selon une ou plusieurs des revendications 1 à 5, pour la teinture ou l'impression d'un matériau, de préférence un matériau fibreux, contenant des groupes hydroxy et/ou carbamoyle.

9. Procédé pour la teinture ou l'impression d'un matériau, de préférence un matériau fibreux, contenant des groupes hydroxy et/ou carbamoyle, dans lequel on applique sur le matériau un ou plusieurs colorants sous forme dissoute et on fixe le ou les colorants sur le matériau par la chaleur ou à l'aide d'un agent à action alcaline ou à l'aide de ces deux moyens, **caractérisé en ce qu'**on utilise des mélanges de colorants selon une ou plusieurs des revendications 1 à 5.
